# EUROPEAN PATENT APPLICATION

(11) **EP 3 851 708 A1**
(43) Date of publication of application: **21.07.2021**
(21) Application number: 19860283.1
(22) Date of filing: 13.09.2019
(51) Int. Cl.: F16J 15/3232, F16J 15/3252, F16J 15/3284

(54) **LIP TYPE SHAFT SEALING DEVICE**

(30) Priority: 14.09.2018 JP 2018172496
(71) Applicant: Eagle Industry Co., Ltd., Minato-ku Tokyo 105-8587 (JP)
(72) Inventor: OSHIMA Hiroki, Tokyo 105-8587 (JP)
(74) Representative: WSL Patentanwälte Partnerschaft mbB
(86) International application number: PCT/JP2019/036079
(87) International publication number: WO 2020/054843

(57) **Abstract**

There is provided a lip type shaft sealing device capable of reducing a load on a sliding portion with respect to a shaft of a first lip due to a pressure on a machine inside using a property that a refrigerant permeates the first lip.

In a lip type shaft sealing device 1 for sealing an annular gap between a shaft 2 and a housing 3 by a first lip 4 on a machine inside L held by a metallic lip support body 5 and 6 and a second lip 7 on an atmosphere side A, the shaft 2 and the housing 3 being rotatable relative to each other. The first lip 4 is a member made of a material that allows a refrigerant to permeate the member and at least one of the metallic lip support body 5 and 6 and the first lip 4 is provided with communication means 54 and 64 for allowing a refrigerant to pass toward a front end back surface side space F of the first lip 4.

## Description

### {TECHNICAL FIELD}

The present invention relates to a lip type shaft sealing device.

### {BACKGROUND ART}

As a shaft sealing device that prevents a leakage of a fluid, a lip type shaft sealing device is used to obtain a desired sealing performance using a pressure of a fluid. For example, in the lip type shaft sealing device used in a compressor constituting a car air conditioner, a sliding portion of a front end of a seal lip made of rubber having elasticity slides on a shaft so as to prevent a refrigerant on a machine inside from leaking to an atmosphere side.

As an example of the lip type shaft sealing device of the compressor, Patent Citation 1 discloses that a first lip corresponding to a seal lip on a machine inside axially seals a refrigerant on the machine inside. Further, a second lip is provided on the atmosphere side in relation to the first lip so as to improve the axial sealing property of the refrigerant. The first lip is held by a metallic lip support body and is unified with the second lip so as to assemble the lip type shaft sealing device. Specifically, the lip support body includes a backup ring which supports a back of a surface receiving a pressure of a refrigerant on the machine inside of the first lip and a casing body which is provided in a main body corresponding to a portion attached and fixed to a housing on the outer radial side of the first lip and secures the strength of the first lip.

In such a lip type shaft sealing device, since the second lip prevents the leakage of the refrigerant to the atmosphere side even when a small amount of the refrigerant on the machine inside passes between the shaft and a front end portion of the first lip, a small amount of the refrigerant is accumulated in a front end back surface side space of the first lip. In general, the pressure of the refrigerant on the machine inside is high and the sliding portion of the first lip is pressed to the inner radial side with respect to the shaft due to the pressure of the refrigerant. However, when an internal pressure is generated in the front end back surface side space of the first lip as described above, a stress that pushes back the front end portion to the outer radial side is generated and a part of the load of the sliding portion with respect to the shaft can be alleviated.

### {CITATION LIST}

### {Patent Literature}

Patent Citation 1: JP 2009-24541 A (Page 5, FIG. 2)

However, since the amount of the refrigerant entering the front end back surface side space of the first lip is small, a sufficient internal pressure is not made in the front end back surface side space and the sliding portion of the first lip cannot suppress a stress that is strong on the inner radial side with respect to the shaft. As a result, there is concern that a load is applied to the sliding portion with respect to the shaft of the first lip and the life of the lip type shaft sealing device is shortened.

### {SUMMARY OF INVENTION}

### {Technical Problem}

The present invention has been made in view of such problems and an object is to provide a lip type shaft sealing device capable of reducing a load on a sliding portion with respect to a shaft of a first lip due to a pressure on a machine inside using a property that a refrigerant permeates the first lip.

### {Solution to Problem}

In order to solve the foregoing problems, a lip type shaft sealing device according to the present invention is a lip type shaft sealing device for sealing an annular gap between a shaft and a housing by a first lip provided on a machine inside and held by a metallic lip support body and a second lip provided on an atmosphere side, the shaft and the housing being rotatable relative to each other, in which the first lip is a member made of a material that allows a refrigerant to permeate the member, and in which at least one of the metallic lip support body and the first lip is provided with communication means for allowing the refrigerant to pass toward a back surface side space of a front end portion of the first lip. According to the aforesaid feature of the present invention, since the refrigerant on the machine inside easily reaches the back surface side space of the front end portion of the first lip through the communication means of the lip support body, the internal pressure of the back surface side space of the front end portion of the first lip increases, so that the differential pressure between the pressure on the machine inside and the internal pressure of the back surface side space of the front end portion of the first lip can be decreased and the load on the sliding portion with respect to the shaft of the first lip can be reduced.

It may be preferable that the communication means is a through-hole which is formed in the lip support body and communicates from the machine inside to the back surface side space of the front end portion of the first lip. According to this preferable configuration, the structure of the lip type shaft sealing device can be simplified.

It may be preferable that the lip type shaft sealing device is provided with an intermediate chamber which is defined by the metallic lip support body, the second lip and the shaft, the intermediate chamber communicating with the back surface side space. According to this preferable configuration, since the refrigerant can be accumulated in the intermediate chamber, the pressure generated in the intermediate chamber can be made uniform and the back pressure can be stably maintained in the back surface side space of the front end portion of the first lip.

It may be preferable that the metallic lip support body provided with the through-hole is a backup ring including a proximal portion radially extending and an extension portion extending along the shaft, the through-hole being formed in the extension portion. According to this preferable configuration, since the through-hole is connected to the intermediate chamber, the refrigerant permeating the first lip quickly enters the intermediate chamber.

It may be preferable that the first lip is made of rubber and the second lip is made of polytetrafluoroethylene (PTFE). According to this preferable configuration, since the refrigerant can permeate the first lip and the second lip can prevent the leakage of the refrigerant to the atmosphere side, the back pressure applied to the back surface side space of the front end portion of the first lip can be reliably maintained.

It may be preferable that the metallic lip support body has a plurality of the through-holes arranged in a circumferential direction. According to this preferable configuration, a large amount of the refrigerant can be reliably sent from the plurality of through-holes to the back surface side space of the front end portion of the first lip.

It may be preferable that the metallic lip support body has a plurality of the through-holes equiangularly arranged in a circumferential direction. According to this preferable configuration, the back pressure can be given to the back surface side space of the front end portion of the first lip without being biased in the circumferential direction.

### {BRIEF DESCRIPTION OF DRAWINGS}

FIG. 1 is a cross-sectional view illustrating a lip type shaft sealing device according to a first embodiment of the present invention.
FIG. 2 is an enlarged cross-sectional view of a pressure applied to a sliding portion of a first lip and a refrigerant path from a machine inside to a back surface side space of a front end portion of the first lip in the first embodiment.
FIG. 3 is an enlarged cross-sectional view of a lip type shaft sealing device according to a second embodiment of the present invention.
FIG. 4 is an enlarged cross-sectional view of a lip type shaft sealing device according to a third embodiment of the present invention.
FIG. 5 is an enlarged cross-sectional view of a lip type shaft sealing device according to a fourth embodiment of the present invention.

### {DESCRIPTION OF EMBODIMENTS}

Modes for implementing a lip type shaft sealing device according to the present invention will be described on the basis of a first embodiment.

### {First embodiment}

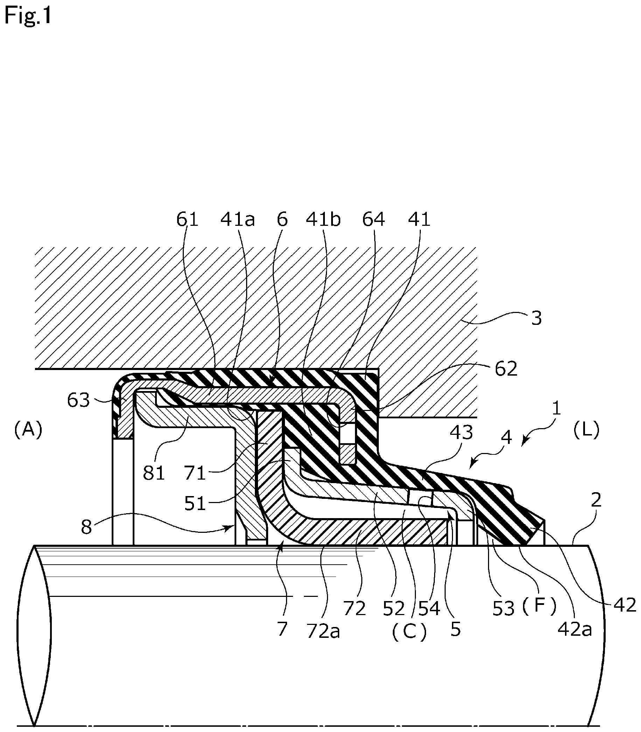

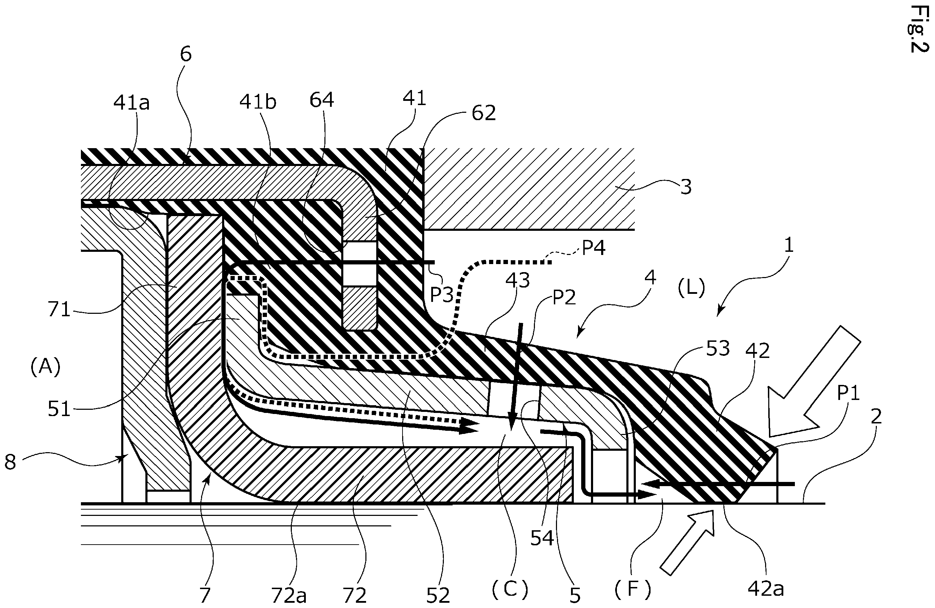

A lip type shaft sealing device according to a first embodiment will be described with reference to FIGS. 1 and 2. Hereinafter, a description will be made on the assumption that the front side of the drawing of FIG. 1 is the front side. Then, the left side is the atmosphere side A, the right side is the machine inside L, the upper side is the outer radial side, and the lower side is the inner radial side based on the vertical and horizontal directions when viewed from the front side.

As illustrated in FIG. 1, a lip type shaft sealing device 1 mainly includes a first lip 4 and a second lip 7 together with a first backup ring 5, a second backup ring 8, and a skeleton ring 6 used to assist the strength of the first lip 4 and the second lip 7 and regulate the movement thereof. Then, when a unit thereof is attached into a housing 3, an annular gap between a shaft 2 and the housing 3 is sealed and a leakage of a refrigerant on the machine inside L is prevented. As the refrigerant, alternative CFCs such as HCFC and HFC, carbon dioxide, and the like are used. Additionally, the first backup ring 5 is a backup ring and a metallic lip support body of the present invention and the skeleton ring 6 is a metallic lip support body of the present invention.

The first lip 4 is a member made of rubber such as hydrogenated nitrile rubber, nitrile rubber, fluoro rubber, and ethylene propylene rubber and mainly includes a main body 41 which is located on the outer radial side, a leg portion 43 which extends from the main body 41 to the machine inside L, and a front end portion 42 which is located on the inner radial side of the leg portion 43. The main body 41 of the first lip 4 surrounds the second lip 7, the first backup ring 5, and the second backup ring 8 at the outer radial side. The main body 41 is internally provided with the metallic skeleton ring 6 having an inverted U-shaped cross-section. Further, the leg portion 43 is supported by an extension portion 52 of the first backup ring 5 from the inner radial side corresponding to the rear side of the surface that receives the pressure of the refrigerant on the machine inside L, the front end portion 42 which is not supported by the extension portion 52 is likely to move in the radial direction, and a sliding portion 42a of the front end portion 42 slides on the shaft 2. In addition, a space which is formed on the back surface side of the front end portion 42 and is formed between the front end portion 42 and the shaft 2 is referred to as a front end back surface side space F.

The second lip 7 is a member made of PTFE and includes a root portion 71 and an extension portion 72 extending in the inner radial direction. The root portion 71 is held while being sandwiched in the axial direction by a proximal portion 51 of the first backup ring 5 disposed on the machine inside L, the second backup ring 8 disposed on the atmosphere side A, and a proximal portion 41b of the first lip 4 disposed on the outer radial side of the first backup ring 5. Further, the outer periphery of the root portion 71 of the second lip 7 and the outer periphery of the outer radial portion 81 of the second backup ring 8 are brought into contact with an annular fitting recess portion 41a on the inner radial side of the main body 41 of the first lip 4 and the root portion 71 of the second lip 7 and the second backup ring 8 are accommodated in the fitting recess portion 41a of the first lip 4. Additionally, the proximal portion 41b of the first lip 4, the root portion 71 of the second lip 7, and the outer radial portion 81 of the second backup ring 8 are held while being sandwiched by a pair of leg portions 62 and 63 of the skeleton ring 6. Further, the extension portion 72 extends to the machine inside L and slides on the shaft 2 in a sliding portion 72a of the extension portion 72. In addition, the first lip 4 is preferably more permeable to the refrigerant than the second lip 7.

The first backup ring 5 is a metallic member having a substantially S-shaped cross-section and includes the proximal portion 51 which extends in the outer radial direction and serves as a sandwiching and fixing portion, the extension portion 52 which extends from the inner radial end of the proximal portion 51 to the machine inside L and is inclined at a small angle with respect to the shaft 2, and a terminal portion 53 which extends from the inner radial end of the extension portion 52 to the inner radial side. Then, the extension portion 52 is formed by equally arranging through-holes 54 corresponding to communication means in the circumferential direction. Further, since the opening of the through-hole 54 has a circular shape, the strength of the first backup ring 5 itself can be easily maintained. In addition, a space which is defined by the first backup ring 5, the second lip 7, and the shaft 2 is referred to as an intermediate chamber C and the intermediate chamber C is continuous to the front end back surface side space F.

The skeleton ring 6 includes a proximal portion 61 and leg portions 62 and 63 which extend from the respective end portions on the machine inside L and the atmosphere side A of the proximal portion 61 to the inner radial side and through-holes 64 corresponding to communication means are equally arranged in the leg portion 62 in the circumferential direction. Further, since the opening of the through-hole 64 has a circular shape, the strength of the skeleton ring 6 itself can be easily maintained.

Referring to FIG. 2, the shaft sealing mechanism and the flow of the refrigerant from the machine inside L to the front end back surface side space F will be mainly described. The front end portion 42 of the first lip 4 receives a pressure from the refrigerant and is pressed against the rotating shaft so as to prevent the movement of the refrigerant to the front end back surface side space F. Further, since the second lip 7 prevents the leakage of the refrigerant to the atmosphere side A, the front end back surface side space F is filled with a small amount of the refrigerant of the refrigerant passing between the shaft 2 and the front end portion 42 or the refrigerant permeating the rubber portion of the front end portion 42 of the first lip 4. Hereinafter, since the refrigerant passing between the shaft 2 and the front end portion 42 and flowing into the front end back surface side space F is relatively small or substantially constant, its description is omitted.

When the pressure on the machine inside L increases from this state, the refrigerant permeates a part of the rubber portion of the first lip 4 and is less likely to pass through metal or PTFE. For this reason, the refrigerant can permeate the first lip 4 made of rubber, but cannot pass through the metallic first backup ring 5, the skeleton ring 6, and the second lip 7 made of PTFE.

As a path that permeates the first lip 4 and reaches the front end back surface side space F, there are four paths mainly including a first path P1 which permeates the front end portion 42 in the axial direction and passes through the front end back surface side space F, a second path P2 which sequentially passes through the leg portion 43, the through-hole 54, the intermediate chamber C, and the front end back surface side space F, a third path P3 which sequentially passes through the main body 41, the through-hole 64, the proximal portion 41b, the gap between the proximal portion 51 of the first backup ring 5 and the root portion 71 of the second lip 7, the intermediate chamber C, and the front end back surface side space F, and a fourth path P4 (indicated by a dashed arrow) which does not pass through the through-holes 54 and 64 and sequentially passes through the leg portion 43, the proximal portion 41b, the gap between the proximal portion 51 of the first backup ring 5 and the root portion 71 of the second lip 7, the intermediate chamber C, and the front end back surface side space F. Since the refrigerant passing through the second path P2 and the third path P3 has a short distance to permeate the first lip 4 compared to the refrigerant passing through the fourth path P4, the amount of the refrigerant permeating the first lip 4 and quickly passing from the machine inside L to the front end back surface side space F is large.

Since the intermediate chamber C is spatially wider than the front end back surface side space F, the refrigerant passing through four paths described above is accumulated in the intermediate chamber C. Accordingly, a pressure generated in the intermediate chamber C can be made uniform and a back pressure can be stably maintained in the front end back surface side space F. When the internal pressure of the front end back surface side space F increases, a differential pressure between the pressure on the machine inside L and the internal pressure of the front end back surface side space F is reduced so as to exert a force applied from the machine inside L to the inner radial side in the sliding portion 42a and a force applied to push back from the front end back surface side space F to the outer radial side (see a white arrow of FIG. 2). In this way, the load of the sliding portion 42a with respect to the shaft 2 can be reduced. Particularly, when the pressure on the machine inside L instantly increases, the refrigerant passes through the second path P2 and the third path P3 in addition to the first path P1 and quickly reaches the front end back surface side space F and the internal pressure increases, the load of the sliding portion 42a with respect to the shaft 2 can be reduced in response to an increase in pressure on the machine inside L. In addition, any one of the through-holes 54 and 64 may be formed, but since the second path P2 passing through the through-hole 54 has a short distance in which the refrigerant permeates the first lip 4, the through-hole 54 is desirably formed.

On the other hand, when the pressure on the machine inside L decreases and the internal pressure of the front end back surface side space F is sufficiently higher than the pressure on the machine inside L, the refrigerant flows to the machine inside L and the refrigerant of the intermediate chamber C also flows to the machine inside L through the front end back surface side space F so that the pressure of the intermediate chamber C and the front end back surface side space F decreases.

As described above, since the first backup ring 5 and the skeleton ring 6 are provided with the through-holes 54 and 64 which communicate from the machine inside L to the front end back surface side space F, the refrigerant on the machine inside L easily reaches the front end back surface side space F through the through-holes 54 and 64. Accordingly, since the internal pressure of the front end back surface side space F increases, the differential pressure between the pressure on the machine inside L and the internal pressure of the front end back surface side space F can be decreased and the load of the sliding portion 42a with respect to the shaft of the first lip 4 can be reduced.

Further, since the intermediate chamber C is defined and formed by the first backup ring 5, the second lip 7, and the shaft 2 and is continuous to the front end back surface side space F, the refrigerant can be accumulated in the intermediate chamber C. Accordingly, the pressure generated in the intermediate chamber C can be made uniform and the back pressure in the front end back surface side space F can be stably maintained.

Further, since the through-hole 54 is formed in the extension portion 52 of the first backup ring 5, the through-hole 54 is connected to the intermediate chamber C. Accordingly, the refrigerant permeating the first lip 4 quickly enters the intermediate chamber C.

Further, since the first lip 4 is a rubber lip seal and the second lip 7 is a polytetrafluoroethylene (PTFE) lip seal, the refrigerant can permeate the first lip 4. Accordingly, since the leakage of the refrigerant to the atmosphere side A can be prevented by the second lip 7, the back pressure applied to the front end back surface side space F can be reliably maintained.

Further, since the first backup ring 5 and the skeleton ring 6 are provided with the plurality of through-holes 54 and 64 in the circumferential direction, a large amount of the refrigerant can be reliably sent from the plurality of through-holes to the front end back surface side space F.

Further, since the first backup ring 5 and the skeleton ring 6 are formed by equally arranging the through-holes 54 and 64 in the circumferential direction, a back pressure can be applied to the front end back surface side space F without being biased in the circumferential direction.

### {Second embodiment}

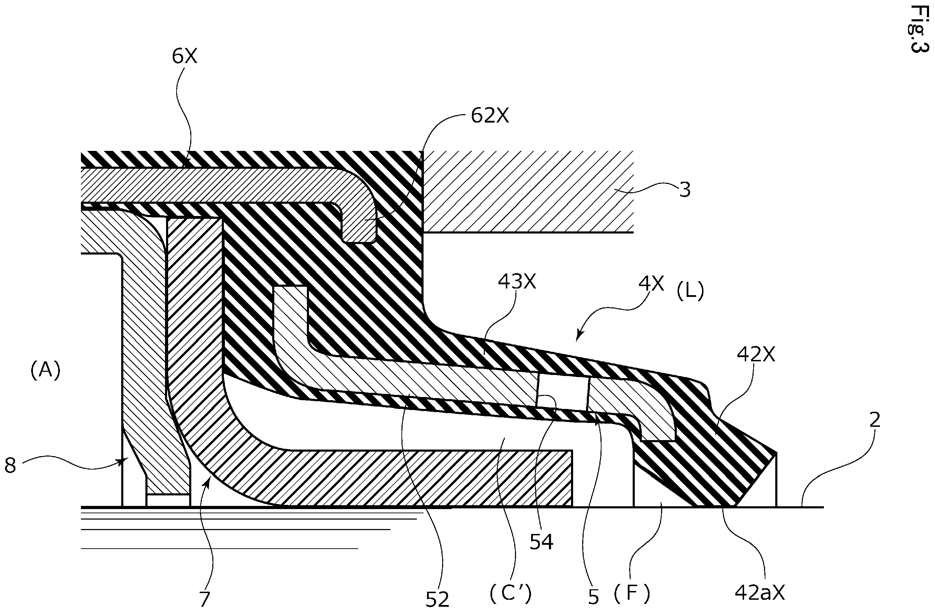

A lip type shaft sealing device according to a second embodiment of the present invention will be described with reference to FIG. 3. In addition, the same parts as those shown in the above-described embodiment are denoted by the same reference numerals and the redundant description will be omitted.

As illustrated in FIG. 3, the first backup ring 5 is embedded in a leg portion 43X of a first lip 4X along the longitudinal direction of the leg portion 43X. The extension portion 52 of the first backup ring 5 is provided with the through-hole 54, but a leg portion 62X of a skeleton ring 6X is not provided with the through-hole. Further, a space which is defined by the leg portion 43X of the first lip 4X, the second lip 7, and the shaft 2 is referred to as an intermediate chamber C'.

When the pressure on the machine inside L instantly increases, the refrigerant passes through the path sequentially passing through the leg portion 43X, the through-hole 54, the leg portion 43X, the intermediate chamber C', and the front end back surface side space F in addition to the first path P1 described in the first embodiment and quickly reaches the front end back surface side space F and the internal pressure increases. Accordingly, the load of the sliding portion 42aX of the front end portion 42X with respect to the shaft 2 can be reduced in accordance with an increase in pressure on the machine inside L.

### {Third embodiment}

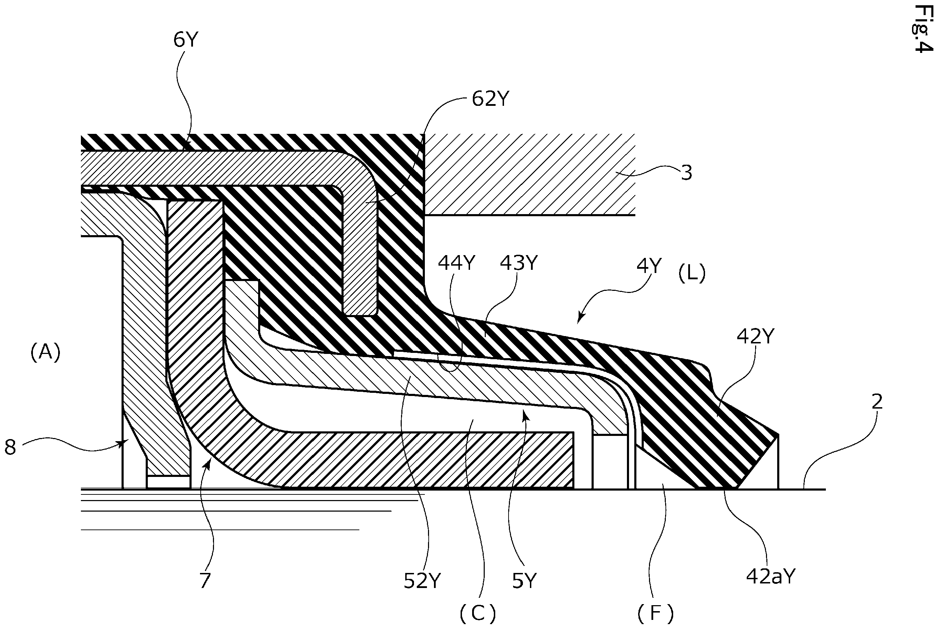

A lip type shaft sealing device according to a third embodiment of the present invention will be described with reference to FIG. 4. In addition, the same parts as those shown in the above-described embodiment are denoted by the same reference numerals and the redundant description will be omitted.

As illustrated in FIG. 4, a groove portion 44Y which is communication means extending in the axial direction and recessed in the outer radial direction is formed on the inner radial side of the leg portion 43Y of the first lip 4Y and the groove portion 44Y has an opening width of a predetermined dimension in the circumferential direction and is evenly disposed in the circumferential direction. Further, an extension portion 52Y of a first backup ring 5Y and a leg portion 62Y of a skeleton ring 6Y are not provided with the through-hole. In addition, the extension portion 52Y or the leg portion 62Y may be provided with the through-hole.

When the pressure on the machine inside L instantly increases, the refrigerant passes through the path sequentially passing through the leg portion 43Y, the groove portion 44Y, and the front end back surface side space F in addition to the first path P1 described in the first embodiment and quickly reaches the front end back surface side space F and the internal pressure increases. Accordingly, the load of the sliding portion 42aY of the front end portion 42Y with respect to the shaft 2 can be reduced in accordance with an increase in pressure on the machine inside L.

### {Fourth embodiment}

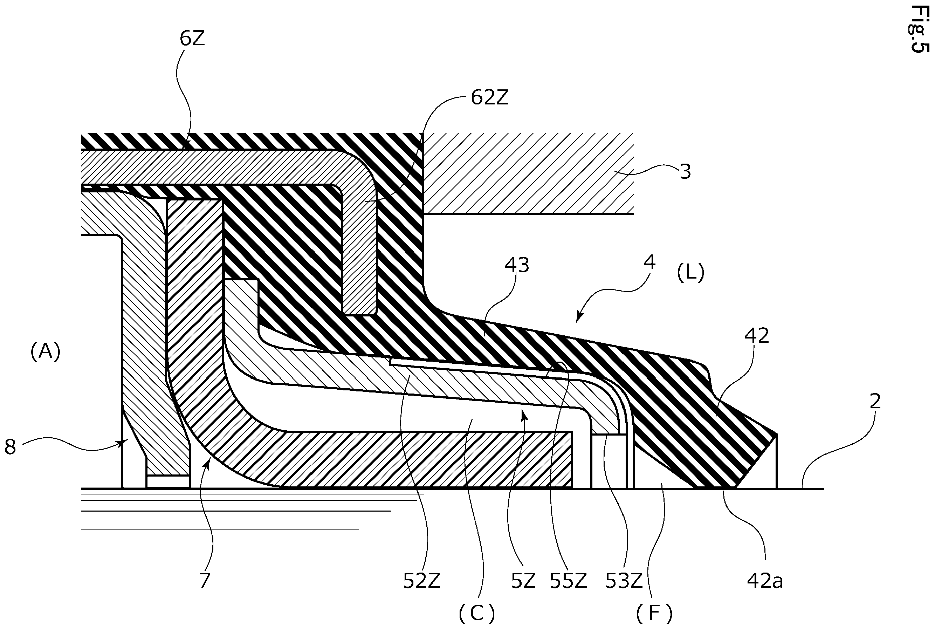

A lip type shaft sealing device according to a fourth embodiment will be described with reference to FIG. 5. In addition, the same parts as those shown in the above-described embodiment are denoted by the same reference numerals and the redundant description will be omitted.

As illustrated in FIG. 5, a groove portion 55Z corresponding to communication means extending in the axial direction and recessed in the inner radial direction is formed on the outer radial side of the first backup ring 5Z from the extension portion 52Z to the terminal portion 53Z and the groove portion 55Z has an opening width of a predetermined width in the circumferential direction and is equally disposed in the circumferential direction. Further, the extension portion 52Z of the first backup ring 5Z and the leg portion 62Z of the skeleton ring 6Z are not provided with the through-hole. In addition, the extension portion 52Z or the leg portion 62Z may be provided with the through-hole.

When the pressure on the machine inside L instantly increases, the refrigerant passes through the path sequentially passing through the leg portion 43, the groove portion 55Z, and the front end back surface side space F in addition to the first path P1 described in the first embodiment and quickly reaches the front end back surface side space F and the internal pressure increases. Accordingly, the load of the sliding portion 42a of the front end portion 42 with respect to the shaft 2 can be reduced in accordance with an increase in pressure on the machine inside L.

Although the embodiments of the present invention have been described above with reference to the drawings, a detailed configuration is not limited to these embodiments and modifications or additions in the scope not departing from the spirit of the present invention are also included in the present invention.

For example, although a case has been described such that the through-hole 54 is formed at one position of the extension portion 52 of the first backup ring 5 in cross-section, the present invention is not limited thereto and the through-hole may be formed at two or more positions as long as the strength of the first backup ring 5 itself is not significantly impaired.

Further, although a case has been described such that the through-hole 64 is formed at one position of the leg portion 62 of the skeleton ring 6 in cross-section, the present invention is not limited thereto and the through-hole may be formed at two or more positions as long as the strength of the skeleton ring 6 itself is not significantly impaired.

Further, although a case has been described such that the first lip 4 is a member made of rubber such as hydrogenated nitrile rubber, nitrile rubber, and fluoro rubber, and ethylene propylene rubber, the present invention is not limited thereto and any material that is permeable to the refrigerant and that can seal the refrigerant may be used.

Further, although a case has been described such that the second lip 7 is a member made of PTFE, the present invention is not limited thereto and any material that is impermeable to the refrigerant and that can seal the refrigerant may be used.

Further, although a case has been described such that the lip type shaft sealing device includes two lip seals, the present invention is not limited thereto and three or more lip seals may be provided.

### {REFERENCE SIGNS LIST}

1 Lip type shaft sealing device
2 Shaft
3 Housing
4 First lip
4X, 4Y First lip
5 First backup ring (backup ring, metallic lip support body)
5Y, 5Z First backup ring
6 Skeleton ring (metallic lip support body)
7 Second lip
41 Main body
42 Front end portion
42a Sliding portion
43 Leg portion
44Y Groove portion (communication means)
51 Proximal portion
52 Extension portion
54 Through-hole (communication means)
55Z Groove portion (communication means)
64 Through-hole (communication means)
72 Extension portion
72a Sliding portion
A Atmosphere side
C, C' Intermediate chamber
F Front end back surface side space
L Machine inside

## Claims

1. A lip type shaft sealing device for sealing an annular gap between a shaft and a housing by a first lip provided on a machine inside and held by a metallic lip support body and a second lip provided on an atmosphere side, the shaft and the housing being rotatable relative to each other,
wherein the first lip is a member made of a material that allows a refrigerant to permeate the member, and
wherein at least one of the metallic lip support body and the first lip is provided with communication means for allowing the refrigerant to pass toward a back surface side space of a front end portion of the first lip.

2. The lip type shaft sealing device according to claim 1,
wherein the communication means is a through-hole which is formed in the lip support body and communicates from the machine inside to the back surface side space of the front end portion of the first lip.

3. The lip type shaft sealing device according to claim 1 or 2,
wherein the lip type shaft sealing device is provided with an intermediate chamber which is defined by the metallic lip support body, the second lip and the shaft, the intermediate chamber communicating with the back surface side space.

4. The lip type shaft sealing device according to claim 2,
wherein the metallic lip support body provided with the through-hole is a backup ring including a proximal portion radially extending and an extension portion extending along the shaft, the through-hole being formed in the extension portion.

5. The lip type shaft sealing device according to any one of claims 1 to 4,
wherein the first lip is made of rubber and the second lip is made of polytetrafluoroethylene (PTFE).

6. The lip type shaft sealing device according to claim 2,
wherein the metallic lip support body has a plurality of the through-holes arranged in a circumferential direction.

7. The lip type shaft sealing device according to claim 2,
wherein the metallic lip support body has a plurality of the through-holes equiangularly arranged in a circumferential direction.
